# EUROPÄISCHE PATENTANMELDUNG

(11) **EP 2 189 340 A2**
(43) Veröffentlichungstag der Anmeldung: **26.05.2010**
(21) Anmeldenummer: 09171441.0
(22) Anmeldetag: 28.09.2009
(51) Int. Cl.: B60S 1/08, H04N 5/225

(54) **Kameramodul mit Mehrfachfunktion**

(30) Priorität: 24.11.2008 DE 102008044003
(71) Anmelder: Robert Bosch GmbH, 70469 Stuttgart (DE)
(72) Erfinder: Seger, Ulrich, 71229, Leonberg-Warmbronn (DE); Karl, Matthias, 76275, Ettlingen (DE); Schwarz, Axel, 76530, Baden-Baden (DE); Uhler, Werner, 76646, Bruchsal (DE); Hog, Norbert, 77767, Appenweier (DE)

(57) **Zusammenfassung**

Die Erfindung betrifft ein Kameramodul (110) für den Einsatz in einem Kraftfahrzeug. Das Kameramodul (110) umfasst mindestens eine Kamera (112) mit einem ortsauflösenden Bildgebungssensor (118) zur Erfassung eines Aufnahmebereichs (120), insbesondere eines Verkehrsraumes (128) der Umgebung des Kraftfahrzeugs. Weiterhin umfasst das Kameramodul (110) mindestens einen in dem Kameramodul (110) integrierten optischen Sekundärsensor (138), insbesondere einen Regensensor. Der optische Sekundärsensor (138) umfasst mindestens einen optischen Sensor (140) und mindestens einen Lichtleiter (142). Der Lichtleiter (142) ist eingerichtet, um mindestens ein optisches Signal von einem Einkopplungsbereich (146) des Kameramoduls (110) zu dem optischen Sensor (140) zu leiten.

## Beschreibung

### Stand der Technik

Die Erfindung geht aus von bekannten Kameramodulen, welche bereits heute für vielfältige Einsatzgebiete im Kraftfahrzeugbereich eingesetzt werden. Insbesondere lassen sich derartige Kameramodule für eine Fahrzeugumfelddetektion einsetzen, also für die Beobachtung von Aufnahmebereichen in der Umgebung des Kraftfahrzeugs. Die Kameramodule sind insbesondere für den Einsatz hinter einer Windschutzscheibe eines Kraftfahrzeugs, insbesondere im Bereich des Innenspiegels, einsetzbar. Grundsätzlich lassen sich die im Rahmen der vorliegenden Erfindung beschriebenen Kameramodule jedoch auch für andere Einsatzzwecke im Kraftfahrzeugbereich oder in anderen Bereichen einsetzen.

An Kameras zur Fahrzeugumfelddetektion werden vermehrt vielseitige Ansprüche gestellt. So werden in DE 10 2004 015 040 A1 Kameras für Kraftfahrzeuge beschrieben, bei welchen eine Primärfunktion einer Verkehrssensorik vorhanden ist, beispielsweise zur Erkennung von Verkehrszeichen, Fahrspurerkennung, Objekterkennung, Ausleuchtungssteuerung, Messung der Intensität des von vorne einfallenden Lichtes oder ähnlicher Primärfunktionen unter Verwendung einer Kamera. Daneben enthält die dort beschriebene Kamera Sekundärfunktionen, welche auf einer optischen Sekundärsensorik, die ebenfalls in der Kamera integriert ist, beruhen. Mit diesen Sekundärfunktionen lassen sich beispielsweise eine Regensensorik, eine Lichtsensorik, eine Betauungs- und Beschlagsdetektion, eine Sonneneinstrahlrichtungs- und Sonneneinstrahlstärke-Detektion (Solar-Load-Detektion) oder andere Sensorfunktionen realisieren. Sowohl die Primärfunktion als auch der Sekundärsensor nutzen dabei in der in DE 10 2004 015 040 A1 beschriebenen Kamera denselben Bildsensor.

Die in DE 10 2004 015 040 A1 beschriebene Kamera weist gegenüber herkömmlichen Kameras für den Einsatz im Automobilbereich bereits den Vorteil auf, dass diese besonders bauraumsparend und kostengünstig realisiert werden kann. Dies ist insbesondere auf den hohen Integrationsgrad zurückzuführen, bei welchem Primär- und Sekundärfunktionen in ein und dasselbe Modul integriert werden. Dennoch bietet auch die in DE 10 2004 015 040 A1 beschriebene Kamera weitere Ansatzpunkte für eine Optimierung. So verwendet diese in verschiedenen Ausführungsformen einen separaten Hohlspiegel für den optischen Sekundärsensor, um optische Signale dieses Sekundärsensors auf den Bildsensorchip abzubilden. Derartige zusätzliche optische Elemente sind technisch aufwändig zu realisieren. Weiterhin lässt sich die Ausnutzung der zur Verfügung stehenden Sensorflächen weiter optimieren.

### Offenbarung der Erfindung

Es werden daher ein Kameramodul für den Einsatz in einem Kraftfahrzeug und ein Verfahren zur optischen Überwachung eines Umgebungsbereichs eines Kraftfahrzeugs vorgeschlagen, welche die Nachteile der aus dem Stand der Technik bekannten Kameramodule und Verfahren zumindest weitgehend vermeiden und die oben beschriebenen Verbesserungspotenziale ausnutzen. Das Kameramodul kann in weiten Teilen ähnlich zu dem in DE 10 2004 015 040 A1 beschriebenen Kameramodul ausgestaltet sein, so dass für mögliche optionale Ausführungsformen insbesondere auf dieses Kameramodul verwiesen werden kann. Das vorgeschlagene Verfahren kann insbesondere unter Verwendung eines erfindungsgemäßen Kameramoduls gemäß einer oder mehreren der im Folgenden beschriebenen Ausführungsformen durchgeführt werden. Insofern kann für mögliche Details des Verfahrens auf die folgende Beschreibung des Kameramoduls verwiesen werden.

Das Kameramodul umfasst mindestens eine Kamera mit einem ortsauflösenden Bildgebungssensor, wobei die Kamera zur Erfassung eines Aufnahmebereichs eingerichtet ist. Zu diesem Zweck kann die Kamera beispielsweise eine bildgebende Optik, insbesondere mindestens ein Objektiv mit mindestens einer Linse, umfassen. Der Aufnahmebereich kann insbesondere ein Aufnahmebereich im Umgebungsbereich des Kraftfahrzeugs sein, so dass das Kameramodul beispielsweise, wie oben beschrieben, hinter der Windschutzscheibe oder einer sonstigen Scheibe des Kraftfahrzeugs montiert werden kann, um einen Verkehrsraum der Umgebung des Kraftfahrzeugs zu beobachten.

Die Kamerafunktion des Kameramoduls kann einer oder mehreren der oben beschriebenen Primärfunktionen dienen, beispielsweise einer Verkehrszeichenerkennung, einer Fahrspurerkennung, einer Objekterkennung, einer Ausleuchtungssteuerung, einer Messung der Intensität des von vorne einfallenden Lichts oder ähnlichen Funktionen.

Neben dieser Kamera zur Durchführung der mindestens einen Primärfunktion umfasst das Kameramodul weiterhin mindestens einen in dem Kameramodul integrierten optischen Sekundärsensor zur Wahrnehmung mindestens einer Sekundärfunktion. Wie oben beschrieben, kann diese Sekundärfunktion beispielsweise eine oder mehrere der Funktionen einer Regensensorik, einer Lichtsensorik, einer Betauungs- oder Beschlagsdetektion, einer Detektion der Sonneneinstrahlrichtung und Sonneneinstrahlungsstärke oder ähnliche Sekundärfunktionen umfassen.

Unter einer Integration ist dabei eine Ausgestaltung zu verstehen, bei welcher der mindestens eine optische Sekundärsensor beispielsweise in einem Gehäuse des Kameramoduls mit integriert ist. Insbesondere kann der mindestens eine Sekundärsensor ganz oder teilweise innerhalb einer Streulichtblende des Kameramoduls angeordnet sein. Damit unterscheidet sich das vorgeschlagene Kameramodul von aus früheren Anwendungen bekannten Modulen, bei welchen beispielsweise eine Regen-Licht-Sensorik neben einer Videokamera mit einer Streulichtblende eingesetzt wird, also als separate Komponente.

Der Sekundärsensor weist mindestens einen optischen Sensor und mindestens einen Lichtleiter auf. Der optische Sensor dient der Erfassung optischer Signale des Sekundärsensors und kann dabei als einfacher optischer Sensor ausgestaltet sein, also beispielsweise als Fotodiode oder ähnliches lichtempfindliches Halbleiterbauelement. Wie unten näher ausgeführt wird, kann dieser optische Sensor jedoch auch wiederum einen ortsauflösenden optischen Sensor umfassen. Beispielsweise kann dieser optische Sensor wiederum, wie auch der ortsauflösende Bildgebungssensor der Kamera, einen CCD-Chip, einen CMOS-Chip oder andere Arten ortsauflösender Bildgebungssensoren bzw. Bildgebungschips umfassen. Wie unten näher ausgeführt wird, ist es besonders bevorzugt, denselben ortsauflösenden Bildgebungssensor sowohl für die Kamera als auch für den optischen Sekundärsensor einzusetzen.

Unter einem Lichtleiter ist dabei eine Vorrichtung zu verstehen, welche in der Lage ist, optische Signale in Form elektromagnetischer Wellen im sichtbaren und/oder infraroten und/oder ultravioletten Spektralbereich über eine vorgegebene Übertragungsstrecke zu übertragen. Dementsprechend ist der Begriff des Lichtleiters im Rahmen der vorliegenden Erfindung weit zu fassen. Beispielsweise kann der Lichtleiter ein Element sein oder umfassen, welches Licht im klassischen Sinne leitet. Der Lichtleiter kann somit insbesondere ein auf interner Totalreflexion basierender Lichtleiter sein bzw. einen derartigen Lichtleiter umfassen. Grundsätzlich umfasst der Begriff jedoch auch andere Übertragungsanordnungen zum gerichteten Übertragen von Licht, vorzugsweise unter Unterdrückung von Streuungen. Beispielsweise könnte Luft oder Vakuum als Übertragungsmedium in der Übertragungsstrecke fungieren, wobei am Anfang und/oder Ende der Übertragungsstrecke mindestens ein optisches Element vorgesehen sein kann, beispielsweise mindestens ein Spiegel und/oder mindestens ein Prisma und/oder mindestens eine Linse. Weiterhin kann am Anfang und/oder Ende der Übertragungsstrecke beispielsweise auch mindestens eine Blende, beispielsweise mindestens eine Streulichtblende, vorgesehen sein. Der Lichtleiter kann weiterhin eine oder mehrere Wände umfassen, welche die Übertragungsstrecke seitlich abgrenzen und als mechanische Stabilisierung dienen, beispielsweise als mechanische Stabilisierung der Streulichtblende. Beispielsweise kann der Lichtleiter somit einfach als langgestreckte Streulichtblende ausgestaltet sein, mit mindestens einer Streulichtblende am Anfang und/oder Ende der Übertragungsstrecke und mechanisch stabilisierenden Wänden. Allgemein ist also unter einem Lichtleiter im Sinne der vorliegenden Erfindung lediglich eine langgestreckte, eine Streuung unterdrückende Übertragungsstrecke zu verstehen. Der Lichtleiter kann dabei aus geeigneten Materialien hergestellt sein, beispielsweise aus Glas oder, was im Rahmen der vorliegenden Erfindung bevorzugt ist, aus einem oder mehreren Kunststoffen. Auch Kombinationen verschiedener Werkstoffe sind möglich.

Der Lichtleiter soll eingerichtet sein, um das optische Signal von einem Einkopplungsbereich des Kameramoduls zu dem optischen Sensor zu leiten. Der Einkopplungsbereich des Kameramoduls kann beispielsweise eine Öffnung des Kameramoduls hin zu dem Aufnahmebereich umfassen, beispielsweise eine Öffnung eines Gehäuses des Kameramoduls, beispielsweise hin zu einer Windschutzscheibe des Kraftfahrzeugs. Der Lichtleiter muss dabei das optische Signal des optischen Sekundärsensors nicht auf dem vollständigen Weg von diesem Einkopplungsbereich hin zum optischen Sensor leiten, sondern lediglich auf mindestens einem Teilstück dieses optischen Weges. So kann beispielsweise, wie unten anhand von Ausführungsbeispielen näher erläutert wird, ein Lichteintritt auch beabstandet von der Windschutzscheibe angeordnet sein, und ein Lichtaustritt des Lichtleiters beabstandet von dem optischen Sensor. Zumindest ein Teilstück des optischen Weges soll jedoch den Lichtleiter umfassen.

Das Kameramodul kann auf verschiedene Weisen vorteilhaft optional ausgestattet sein. So kann das Kameramodul insbesondere eine Streulichtblende zur Verminderung der Einkopplung von Streulicht in den Bildgebungssensor bzw. in die Kamera umfassen. Der Lichtleiter kann dabei zumindest teilweise in diese Streulichtblende integriert sein, also beispielsweise einen Bestandteil dieser Streulichtblende bilden. Beispielsweise kann der Lichtleiter mindestens eine eine Lichtreflexion unterdrückende Oberfläche aufweisen, beispielsweise eine aufgeraute und/oder eine beschichtete Oberfläche.

Weiterhin kann der Lichtleiter mindestens ein Umlenkelement aufweisen, also ein Element, welches eingerichtet ist, um eine Richtung des Strahlenverlaufs durch den Lichtleiter zu ändern. Dieses Umlenkelement, welches unten anhand von Beispielen näher ausgeführt wird, kann ausgestaltet sein, um einen Sichtbereich des optischen Sekundärsensors gegenüber einem Blickwinkel der Kamera, also beispielsweise gegenüber einer optischen Achse der Kamera, zu verkippen. Insbesondere kommt eine Betrachtung eines über dem Kraftfahrzeug angeordneten Umgebungsbereichs auf diese Weise in Betracht, so dass beispielsweise ein Sensor zur Erfassung einer Sonneneinstrahlung bzw. einer Umgebungsbeleuchtung (Solar-load) realisiert werden kann.

Das Umlenkelement kann beispielsweise ein Prisma, insbesondere eine als Prisma ausgestaltete Endfläche des Lichtleiters, einen Spiegel, eine zumindest teilweise verspiegelte Oberfläche des Lichtleiters oder ähnliche Umlenkelemente umfassen. Das Umlenkelement kann einstückig mit dem übrigen mindestens einen Lichtleiter ausgestaltet sein, also beispielsweise in diesen Lichtleiter integriert sein. Alternativ oder zusätzlich kann dieses Umlenkelement jedoch auch lediglich mit dem Lichtleiter verbunden sein, beispielsweise auf diesen Lichtleiter aufgesetzt sein.

Der Lichtleiter kann weiterhin mindestens eine optische Abbildungseigenschaft aufweisen, also eine Eigenschaft, bei welcher ein optisches Signal in Form mindestens eines Ursprungsbildes durch den Lichtleiter in ein Bild umgewandelt wird. Diese optische Abbildungseigenschaft kann beispielsweise eine kollimierende Eigenschaft, eine fokussierende Eigenschaft, eine Bündelungseigenschaft, eine vergrößernde und/oder verkleinernde Abbildungseigenschaft, eine (wie unten näher ausgeführt wird) Veränderung des Höhen-zu-Breiten-Verhältnisses des Bildes oder ähnliche optische Eigenschaften umfassen.

Weiterhin kann der Lichtleiter in dem Einkopplungsbereich einen Lichteintritt aufweisen, welcher mindestens ein erstes bildgebendes Element aufweist. Dieses erste bildgebende Element kann beispielsweise mindestens ein Prisma, ein Multiprisma, insbesondere eine Fresnel-Linse oder ähnliche bildgebende Elemente umfassen. Auch Kombinationen derartiger Elemente sind möglich.

Auch an einem Lichtaustritt des Lichtleiters kann mindestens ein zweites bildgebendes Element vorgesehen sein, welches ebenfalls wiederum eines oder mehrere der eben genannten bildgebenden Elemente aufweisen kann.

Der optische Sensor des optischen Sekundärsensors kann zumindest teilweise identisch mit dem Bildgebungssensor der Kamera sein. Dabei kann beispielsweise der Aufnahmebereich der Kamera als Primärbild auf einen Primärbildbereich des Bildgebungssensors abgebildet werden und der Sichtbereich des optischen Sekundärsensors als Sekundärbild auf einen Sekundärbildbereich des Bildgebungssensors. Der Primärbildbereich und der Sekundärbildbereich können dabei identisch oder zumindest teilweise verschieden ausgebildet sein. Verschiedene Ausgestaltungen werden unten näher erläutert.

Insbesondere wenn der Primärbildbereich und der Sekundärbildbereich zumindest teilweise identisch sind, so ist es bevorzugt, wenn das Kameramodul eine Bildaufnahmesteuerung umfasst, welche eingerichtet ist, um mittels einer zeitlichen Aufnahmeabfolge Signale des optischen Sekundärsensors von Signalen der Kamera zu trennen. In diesem Fall und auch in anderen Fällen kann der optische Sekundärsensor beispielsweise eine Blitzlichtbeleuchtung, insbesondere eine synchronisierte Blitzlichtbeleuchtung, aufweisen. Insbesondere kann es sich dabei, wie unten an einem Beispiel näher erläutert wird, um eine Blitzlichtbeleuchtung zur Erzeugung eines Blitzlichtmusters mit mehrfacher Blitzauslösung je Bildwiederholzeit handeln.

Alternativ oder zusätzlich zu der Blitzlichtbeleuchtung kann das Kameramodul allgemein mindestens eine Lichtquelle umfassen, welche beispielsweise auch die Blitzlichtbeleuchtung umfassen kann. In diesem Fall ist es bevorzugt, wenn mindestens eine Einkopplungsvorrichtung zur Einkopplung von Licht der Lichtquelle in den Lichtleiter vorgesehen ist. Damit kann das Licht der Lichtquelle beispielsweise genutzt werden, um den Sichtbereich des optischen Sekundärsensors durch den Lichtleiter hindurch zu beleuchten. Besonders bevorzugt ist es dabei, wenn die Einkopplungsvorrichtung, beispielsweise durch Verwendung entsprechender Blockierelemente oder durch eine geschickte Einkopplung, derart ausgestaltet ist, dass Licht lediglich in Richtung des Einkopplungsbereichs, also in Richtung des Lichteintritts des Lichtleiters, eingekoppelt wird, wohingegen eine Einkopplung bzw. eine Leitung des Lichts der Lichtquelle hin zu dem optischen Sensor zumindest teilweise unterdrückt bzw. vermieden wird. Auf diese Weise kann sichergestellt werden, dass Licht der Lichtquelle nicht unmittelbar in den optischen Sensor gerät und dabei die eigentlich interessanten Signale des optischen Sensors, beispielsweise Reflexionen an Regentropfen und/oder entsprechende Abbilder des Sichtbereichs des optischen Sekundärsensors, überlagert.

Insbesondere in dem Fall, in welchem der optische Sensor des optischen Sekundärsensors zumindest teilweise identisch ist mit dem Bildgebungssensor der Kamera, jedoch auch in anderen Fällen, ist es besonders bevorzugt, wenn für den optischen Sekundärsensor zumindest teilweise eine Bildaufnahmeoptik der Kamera mit verwendet wird. So kann beispielsweise Licht aus dem Lichtleiter auf dem Weg zu dem optischen Sensor zumindest teilweise durch diese Bildaufnahmeoptik hindurchtreten. Da in diesem Fall die Bildaufnahmeoptik gleichzeitig optimale abbildende Eigenschaften für den optischen Sekundärsensor und die primäre Kamerafunktion aufweisen muss, ist es in diesem Zusammenhang, wie oben dargestellt, besonders bevorzugt, wenn der Lichtleiter selbst abbildende Eigenschaften aufweist, welche, in Kombination mit den abbildenden Eigenschaften der Bildaufnahmeoptik, für eine optimale Abbildung des optischen Signals auf den optischen Sensor des optischen Sekundärsensors sorgen.

Das vorgeschlagene Kameramodul weist gegenüber herkömmlichen, dem Stand der Technik entsprechenden Kameramodulen eine Vielzahl von Vorteilen auf. So kann beispielsweise eine Streulichtblende, welche an sich der Primärfunktion zuzuordnen ist, gleichzeitig als lichtleitender, vorwiegend beispielsweise flacher Kanal zur Kollimierung des Lichtsignals geformt sein. Der mindestens eine Lichteintritt und/oder der mindestens eine Lichtaustritt des Lichtleiters können bevorzugt Prismen und/oder bildgebende Elemente enthalten, beispielsweise Prismen, welche sich entsprechend einer Linsenfunktion ergänzen. Weiterhin können Linsen vorgesehen sein, so dass das Bild auf dem optischen Sensor bzw. dem ortsauflösenden Bildgebungssensor beispielsweise auf eine innere und/oder äußere Scheibenoberfläche beispielsweise einer Windschutzscheibe fokussiert wird. Optional kann in die Windschutzscheibe ein zeitliches Muster einer Blitzlichtbeleuchtung eingekoppelt werden, beispielsweise schräg zur Scheibenoberfläche, so dass Regentropfen auf das Licht auskoppeln (Detektion von Lichtverlust wie bei herkömmlichen Regensensoren), oder nahezu senkrecht auf die Scheibenoberfläche, so dass beispielsweise Regen als Reflexbild sichtbar wird. Wie oben dargestellt, können der mindestens eine Lichteintritt bzw. der mindestens eine Lichtaustritt des Lichtleiters beispielsweise Multiprismenstrukturen aufweisen. Derartige Multiprismenstrukturen sind technisch einfach zu realisieren, so dass sich mittels dieser Technik beispielsweise Vergrößerungsoptiken oder andere Arten von Bildprojektoren realisieren lassen.

Insgesamt ermöglicht es das vorgeschlagene Kameramodul in einer oder mehreren der oben beschriebenen Ausführungsformen vorzugsweise, durch ein oder wenige relativ leicht fertigbare Vorsatzteile oder Teile, vorzugsweise ohne die bisher übliche Blitzlichtbeleuchtung bei der Regensensorik in Verbindung mit Software, die Sekundärfunktionen sowohl für eine Regendetektion als auch eine Lichtdetektion mittels eines Bildsensors zu realisieren. So lässt sich beispielsweise für die aus der DE 10 2004 015 040 A1 bekannte Regen-Licht-Sensorik, vorzugsweise ohne Verwendung eines separaten Hohlspiegels bzw. Parabolspiegels oder ohne separaten Planspiegel und separate Optik, ein optisches Signal des optischen Sekundärsensors geordnet beispielsweise auf einen Teil des ortsauflösenden Bildgebungssensors oder ein weiteres sensierendes Element, also den optischen Sensor, übertragen. Dabei ist es bevorzugt, wenn beispielsweise das auf diese Weise erzeugte Sekundärbild des optischen Sekundärsensors zumindest annähernd derart ausgewertet werden kann, also ob die Lichtübertragung der Kamera auf die Außen- und/oder Innenfläche der Windschutzscheibe bzw. Fahrzeugscheibe fokussiert wäre.

Das vorgeschlagene Kameramodul ermöglicht weiterhin eine maximale Ausnutzung der für die Funktion beispielsweise einer Regen-Licht-Sensorik verfügbaren Sensorfläche, beispielsweise des ortsauflösenden Bildgebungssensors. Beispielsweise weisen derartige Regen-Licht-Sensoriken im Allgemeinen Sekundärbildbereiche auf, in welchen das Verhältnis von Breite zu Höhe sehr groß ist. So kann beispielsweise ein Verhältnis von Breite zu Höhe von 640 Pixeln zu 30 Pixeln vorliegen. Der Übergang zwischen dem Primärbildbereich und dem Sekundärbildbereich auf dem ortsauflösenden Bildgebungssensor sollte durch eine nachfolgende Bildbearbeitung möglichst klar trennbar sein. Daher sollte das Sekundärlicht des optischen Sekundärsensors beim Auftreffen auf den ortsauflösenden Bildgebungssensor möglichst derart geformt sein, dass die sensierende Fläche dieses ortsauflösenden Bildgebungssensors, welche den Sekundärbildbereich aufnimmt, und nur diese, möglichst gleichmäßig viel Sekundärstrahlung des optischen Signals des optischen Sekundärsensors aufnimmt. In dem genannten Beispiel ist dies ein Verhältnis von ca. 21. Die beobachtete Fläche des Sichtbereichs des optischen Sekundärsensors, beispielsweise auf der Scheibe bzw. Windschutzscheibe des Kraftfahrzeugs, sollte hingegen in der Regel ein nicht derart großes Breiten-zu-Höhen-Verhältnis aufweisen, da beispielsweise Regentropfen in erster Näherung ein rundes Bild erzeugen. Mittels bildgebender Eigenschaften des Lichtleiters bzw. bildgebender Elemente am Lichteinlass und/oder am Lichtauslass des Lichtleiters lässt sich dieses Verhältnis einstellen.

Weiterhin kann der Übertragungsweg des Sekundärlichts, also des optischen Signals des optischen Sekundärsensors, derart eingestellt werden, dass genau das und vorzugsweise nur das geforderte Licht mit dem entsprechenden Breiten-zu-Höhen-Verhältnis auf die Bildaufnahmeoptik der Kamera und/oder den ortsauflösenden Bildgebungssensor trifft. Dabei kann vorzugsweise vollständig ungewolltes Fremdlicht im Ausbreitungspfad des Lichtleiters entfernt werden, beispielsweise indem dieses nicht weitergeleitet und/oder kollimiert wird.

Weitere Vorteile des vorgeschlagenen Kameramoduls liegen in der Möglichkeit, das Kameramodul besonders bauraumsparend und kostengünstig zu realisieren. Dies kann, wie oben beschrieben, beispielsweise dadurch erfolgen, dass die Streulichtblende der Primärfunktion der Kamera ganz oder teilweise auch als Lichtleiter für die Sekundärfunktion des optischen Sekundärsensors ausgestaltet ist.

Weiterhin ermöglicht das vorgeschlagene Kameramodul, als Sekundärfunktion des optischen Sekundärsensors, auch eine Realisierung einer Detektion des von oben einfallenden Lichtes, ohne und/oder mit Unterscheidung der Richtung (Solar-Load-Sensierung). Auf diese Weise lässt sich beispielsweise ein Abblendlicht schnell automatisch steuern, und/oder es lässt sich beispielsweise die jeweilige Seite einer links-rechts-geteilten Klimaanlage steuern.

Das vorgeschlagene Kameramodul lässt sich insbesondere kostengünstig realisieren. Zu diesem Zweck bietet das vorgeschlagene Kameramodul die Möglichkeit einer stoffkostenoptimierten Lösung, bei welcher möglichst wenige und preiswerte Bauelemente eingesetzt werden. Im Idealfall umfasst das Kameramodul, neben der eigentlichen Kamera, beispielsweise lediglich eine geschickt gestaltete Streulichtblende mit der Zusatzfunktion des Lichtleiters sowie gegebenenfalls wenige weitere zusätzliche Komponenten. Die Streulichtblende lässt sich leicht und kostengünstig fertigen, beispielsweise als miteinander vergossenes Bündel von Glasfasern und/oder Kunststofffasern, beispielsweise ähnlich einer Facettenoptik.

Weiterhin lässt sich der Strahlengang des Sekundärlichts des optischen Sekundärsensors und der Strahlengang des Primärlichts der Primärfunktion der Kamera durch die Verwendung des Lichtleiters klar trennen, ohne dass beispielsweise die Position einer Blende und/oder eines Objekts bzw. einer anderen Art von Bildaufnahmeoptik der Kamera aufwändig zum Strahlengang justiert werden muss. Dies ist insbesondere darauf zurückzuführen, dass der Verlauf der Strahlengänge vorwiegend durch die geometrischen Beziehungen der Strahlungsquelle, der Einkoppelelemente, der Scheibe und des Auskoppelelements zueinander festgelegt ist.

Bei der vorgeschlagenen Blitzlichtbeleuchtung, beispielsweise von Regentropfen auf der Scheibe, und insbesondere bei einem Verzicht auf eine Blende, kann sich der Primärbildbereich auch mit dem Sekundärbildbereich auf dem ortsauflösenden Bildgebungssensor überlagern. Insbesondere bei einem hellen Primärbild und einem lichtschwachen Sekundärbild lässt sich das hierdurch geschwächte Signal-Rauschverhältnis deutlich verbessern.

Weiterhin lässt sich der oben beschriebene Effekt der Vereinfachung der Konstruktion des Kameramoduls und der Realisierung eines kostengünstigen Designs insbesondere dadurch bewerkstelligen, dass beispielsweise längliche und/oder flache Lichtleiter für das optische Signal des Sekundärsensors verwendet werden, bei denen der Lichteintritt und/oder der Lichtaustritt durch beispielsweise geeignete Prismenstrukturen und/oder Linsenstrukturen entsprechend geformt ist. Weiterhin lassen sich beispielsweise Oberflächenabschnitte des Lichtleiters als Spiegelflächen nutzen für eine Umlenkung des optischen Signals, wodurch auf zusätzliche Umlenkelemente, wie beispielsweise den in DE 10 2004 015 040 A1 beschriebenen Parabolspiegel, vorzugsweise vollständig verzichtet werden kann. Alternativ oder zusätzlich können restliche Oberflächen des Lichtleiters beispielsweise durch Aufrauen oder Brechungsindexänderungen so gestaltet werden, dass keine Totalreflexion des von außen auf den Lichtleiter auftreffenden Lichtes mehr stattfinden kann, so dass dieser Lichtleiter bevorzugt in Doppelfunktion als Streulichtblende oder Teil einer Streulichtblende für das Primärlicht mit verwendet werden kann.

Durch die Ausgestaltung des Lichtleiters als abbildendes Element bzw. durch das Vorsehen zusätzlicher abbildender Elemente an dem Lichtleiter lassen sich auch unterschiedliche Sichtbereiche des optischen Sekundärsensors realisieren. Beispielsweise kann der Lichtleiter einen trichterförmigen Verlauf aufweisen, um diese Eigenschaften zu erzielen. Auf diese Weise lässt sich beispielsweise eine Redundanz in einer Messstrecke beispielsweise einer Regensensorik und/oder einer Lichtsensorik erzielen. Diese Redundanz kann zum Einsatz kommen, falls aus einer Blickrichtung des Sichtbereichs eine zu starke oder keine Lichtquelle zum Einsatz kommt. Weiterhin lässt sich durch die abbildenden Eigenschaften des Lichtleiters, beispielsweise wiederum eine Trichterform des Lichtleiters, in eine Richtung und durch eine flache Höhenausdehnung in eine andere Richtung eine Bündelung oder Kollimierung des Sekundärlichts oder eine Veränderung des Höhen-zu-Breiten-Verhältnisses erzielen. Auf diese Weise kann die Kollimierung beispielsweise bereits vor einer Bildaufnahmeoptik der Kamera erfolgen und beispielsweise nicht bereits in einer Lichtquelle des optischen Sekundärsensors, so dass beispielsweise auf eine Blende in der Bildaufnahmeoptik optional verzichtet werden kann.

Die Sekundärlichtführung, also die Führung des optischen Signals des optischen Sekundärsensors, lässt sich bevorzugt unterhalb des Verlaufs des Primärlichts der Kamera realisieren. Bei einer Abbildung in den Primärbildbereich bzw. den Sekundärbildbereich auf dem ortsauflösenden Bildgebungssensor der Kamera ist damit vorzugsweise der Sekundärbildbereich im unteren Bereich der Primärstrahlung angeordnet, welcher zumeist dunkler ist als der obere Bereich. Dies bedeutet, dass für die Detektion der Sekundärstrahlung bzw. des optischen Sekundärsignals im gleichen Bereich eine höhere Signaldynamik zur Verfügung steht. Alternativ kann die Sekundärlichtführung jedoch auch auf andere Weise erfolgen, beispielsweise seitlich hinter Streulichtblenden des Kameramoduls angeordnet. Auch die Verwendung mehrerer Lichtleiter anstelle eines einzelnen Lichtleiters ist denkbar.

Der Lichtleiter kann insbesondere an seinem Lichteintritt und/oder an seinem Lichtaustritt derart gestaltet sein, dass die Scheibenoberfläche scharf oder zumindest im Wesentlichen scharf auf den optischen Sensor, beispielsweise den ortsauflösenden Bildgebungssensor, abgebildet wird. Beispielsweise kann diese Abbildung mit einer Rasterung mit einer Genauigkeit von mindestens 0,4 mm erfolgen.

Der Sichtbereich des optischen Sekundärsensors kann von der Blickrichtung, beispielsweise der optischen Achse, der Kamera abweichen. Auf diese Weise lassen sich, wie oben beschrieben, beispielsweise Zusatzfunktionen, wie beispielsweise die Detektion des von oben einfallenden Lichts, mit der Sekundärfunktion und des optischen Sekundärsensors realisieren.

Die optional vorgeschlagene zeitlich synchronisierte Aufnahme, insbesondere mittels einer Blitzlichtbeleuchtung, lässt sich ebenfalls für eine Optimierung der zur Verfügung stehenden Kapazitäten des Bildgebungssensors nutzen. So kann beispielsweise die Blitzlichtbeleuchtung derart ausgestaltet sein, dass eine mehrfache Blitzauslösung der Blitzlichtbeleuchtung je Bild des ortsauflösenden Bildgebungssensors erfolgt. Besonders bevorzugt erfolgt diese mehrfache Blitzauslösung zeitlich gebündelt in dem Zeitbereich, in welchem das Sekundärbild des optischen Sekundärsensors aufgenommen wird.

Wie oben ausgeführt, wird neben dem erfindungsgemäßen Kameramodul weiterhin ein Verfahren zur optischen Überwachung eines Umgebungsbereichs eines Kraftfahrzeugs vorgeschlagen. Bei dem Verfahren wird ein Kameramodul verwendet, insbesondere ein Kameramodul gemäß einer oder mehreren der oben beschriebenen Ausführungsvarianten. Dementsprechend kann für mögliche Details des vorgeschlagenen Verfahrens weitgehend auf die obige Beschreibung verwiesen werden. Bei dem erfindungsgemäßen Verfahren wird mittels mindestens einer Kamera mit einem ortsauflösenden Bildgebungssensor ein Aufnahmebereich erfasst, insbesondere ein Verkehrsraum der Umgebung des Kraftfahrzeugs. Weiterhin wird mindestens ein in dem Kameramodul integrierter optischer Sekundärsensor verwendet, insbesondere ein Regensensor. Der optische Sekundärsensor umfasst mindestens einen optischen Sensor. Mindestens ein optisches Signal wird von einem Einkopplungsbereich des Kameramoduls zu dem optischen Sensor geleitet. Wie oben bei der Definition des Begriffs des Lichtleiters dargestellt, ist der Begriff des Leitens im Rahmen der vorliegenden Erfindung weit zu fassen und betrifft im Wesentlichen eine Übertragung unter Unterdrückung von Streulicht. Zu diesem Zweck können wiederum beispielsweise ein Lichtleiter und/oder ein oder mehrere Streulichtblenden verwendet werden, insbesondere unter Verwendung einer oder mehrerer aufgerauter und/oder beschichteter Oberflächen.

Wiederum kann ein optischer Sensor verwendet werden, welcher zumindest teilweise identisch mit dem ortsauflösenden Bildgebungssensor der Kamera ist. Beispielsweise kann wiederum der ortsauflösende Bildgebungssensor unterteilt sein in einen Primärbildbereich, in welchen der Aufnahmebereich abgebildet wird, und einen Sekundärbildbereich, von welchem das optisches Signal ganz oder teilweise aufgenommen wird und in welchem beispielsweise ein Sichtbereich des optischen Sekundärsensor abgebildet wird. Der Primärbildbereich und der Sekundärbildbereich können, wie oben dargestellt, vorzugsweise zumindest teilweise verschieden sein. Dabei können, wie oben beschrieben, mittels einer zeitlichen Aufnahmeabfolge Signale des optischen Sekundärsensors von Signalen der Kamera getrennt werden. Beispielsweise kann wiederum eine Blitzlichtbeleuchtung des optischen Sekundärsensors verwendet werden, insbesondere eine Blitzlichtbeleuchtung zur Erzeugung eines Blitzlichtmusters mit mehrfacher Blitzauslösung je Bildwiederholzeit. Für weitere mögliche Einzelheiten kann auf die obige Beschreibung verwiesen werden.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: ein erstes Ausführungsbeispiel eines erfindungsgemäßen Kameramoduls mit einem Lichtleiter mit einer Umlenkvorrichtung in Schnittdarstellung;
- Figur 2: eine perspektivische Darstellung des Kameramoduls gemäß Figur 1;
- Figur 3: ein zweites Ausführungsbeispiel eines erfindungsgemäßen Kameramoduls mit einem prismatisch geformten Lichteinlass am Lichtleiter;
- Figur 4: ein mögliches Ausführungsbeispiel eines Lichteinlasses mit einem Multiprisma;
- Figur 5: ein mögliches Ausführungsbeispiel eines Lichtauslasses mit einer Linsenform;
- Figur 6: ein mögliches Ausführungsbeispiel einer Einkopplungsvorrichtung zum Einkoppeln von Licht der Lichtquelle in den Lichtleiter;
- Figur 7: eine Kombination einer Blitzlichtquelle mit einem Lichteinlass mit einem Multiprisma;
- Figur 8: eine mögliche Aufteilung eines Bildbereichs eines Bildgebungssensors in einen Primärbildbereich und einen Sekundärbildbereich; und
- Figur 9: mögliche Ausführungsbeispiele einer zeitlichen Aufnahmeabfolge zur Signalaufnahme mit dem erfindungsgemäßen Kameramodul.

### Ausführungsformen

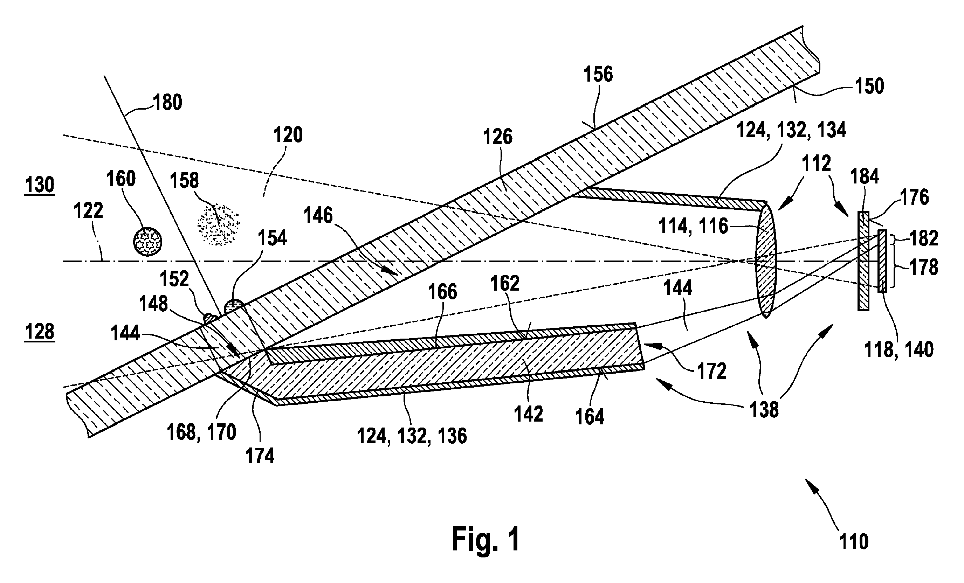

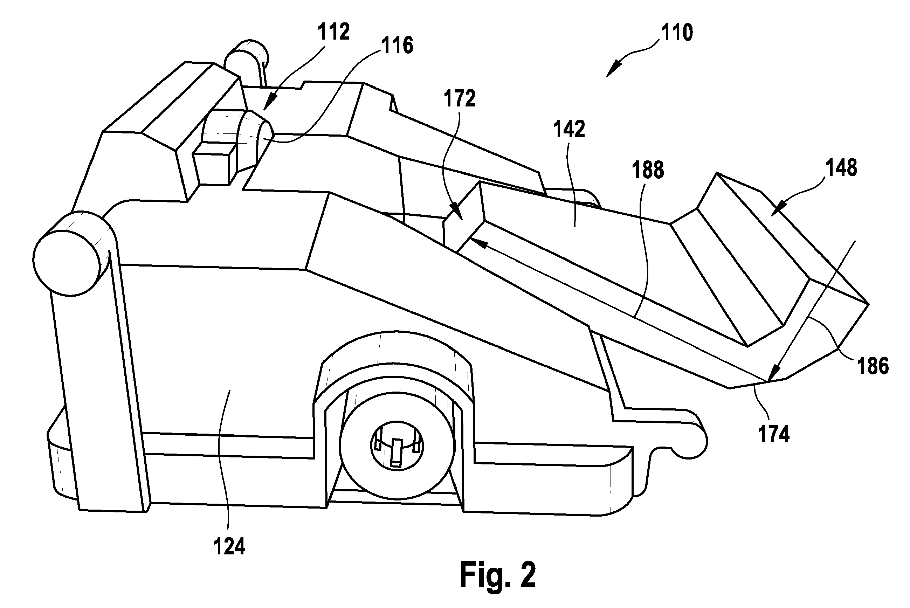

In Figur 1 ist ein erstes Ausführungsbeispiel eines erfindungsgemäßen Kameramoduls 110 in einer Schnittdarstellung von der Seite dargestellt, anhand dessen auch ein Ausführungsbeispiel eines erfindungsgemäßen Verfahrens verdeutlicht werden soll. Figur 2 zeigt dieses Ausführungsbeispiel in einer perspektivischen Darstellung. Das Kameramodul 110 entspricht in seinem Grundaufbau und seiner Wirkungsweise beispielsweise im Wesentlichen dem in DE 10 2004 015 040 A1 beschriebenen Kameramodul, so dass bezüglich möglicher Verwendungszwecke und möglicher weiterer Ausgestaltungen auf diese Schrift verwiesen werden kann.

Das Kameramodul 110 umfasst eine Kamera 112 mit einer in Figur 1 lediglich angedeuteten Bildaufnahmeoptik 114 mit einem Objektiv 116. Weiterhin umfasst die Kamera 112 einen ortsauflösenden Bildgebungssensor 118, welcher auch als Imager bezeichnet wird. Dieser ortsauflösende Bildgebungssensor 118 kann beispielsweise einen CCD-Chip und/oder einen CMOS-Chip umfassen. Die Kamera 112 weist einen Aufnahmebereich 120 auf, dessen Begrenzung in Figur 1 symbolisch durch gestrichelte Linien dargestellt ist. Dieser Aufnahmebereich 120 weist eine optische Achse 122 auf.

Das Kameramodul 110 ist in dem in Figur 1 dargestellten Ausführungsbeispiel in einem Gehäuse 124 integriert, welches in Figur 1 lediglich angedeutet ist. Mittels dieses Gehäuses 124 kann das Kameramodul 110 beispielsweise hinter einer Windschutzscheibe 126 eines Kraftfahrzeugs integriert werden, beispielsweise im Bereich eines Innenspiegels des Kraftfahrzeugs, um einen Verkehrsraum 128 in einer Umgebung 130 des Kraftfahrzeugs mittels des Aufnahmebereichs 120 zu erfassen.

Das Gehäuse 124 umfasst weiterhin eine in dem in Figur 1 dargestellten Ausführungsbeispiel mehrteilig ausgebildete Streulichtblende 132. Diese Streulichtblende ist in diesem Ausführungsbeispiel zweiteilig ausgestaltet und weist eine obere Streulichtblende 134 und eine untere Streulichtblende 136 auf.

Weiterhin umfasst das Kameramodul 110 in dem in Figur 1 dargestellten Ausführungsbeispiel einen integrierten optischen Sekundärsensor 138, welcher, im Gegensatz zu vielen aus dem Stand der Technik bekannten Sekundärsensoren, in dem in Figur 1 dargestellten Ausführungsbeispiel in das Gehäuse 124 des Kameramoduls 110 integriert ist. Dieser optische Sekundärsensor 138 ist in dem dargestellten Ausführungsbeispiel beispielsweise als Regensensor oder für weitere, oben oder im Folgenden näher beschriebene Funktionen ausgestaltet.

Der optische Sekundärsensor umfasst einen optischen Sensor 140, welcher in diesem Ausführungsbeispiel zumindest teilweise baugleich mit dem ortsauflösenden Bildgebungssensor 118 ausgestaltet ist, so dass sich der optische Sekundärsensor 138 und die Kamera 112 den ortsauflösenden Bildgebungssensor 118 teilen. Auch andere Ausgestaltungen sind jedoch grundsätzlich möglich, bei welchen der optische Sekundärsensor 138 über einen separaten optischen Sensor verfügt.

Weiterhin umfasst der optische Sekundärsensor 138 einen Lichtleiter 142, welcher ausgestaltet ist, um ein optisches Signal in Form von Sekundärlicht (in Figur 1 mit der Bezugsziffer 144 bezeichnet) von einem Einkopplungsbereich 146 des Kameramoduls 110 zu dem optischen Sensor 140 zu leiten. Zu diesem Zweck weist der Lichtleiter 142 einen Lichteintritt 148 auf, welcher nahe einer inneren Oberfläche 150 der Windschutzscheibe 126 angeordnet ist, so dass mittels des optischen Sekundärsensors 138 beispielsweise Partikel 152 und/oder Regentropfen 154 auf einer äußeren Oberfläche 156 und/oder Nebel 158 oder Hagel 160 bzw. Regentropfen in einer Umgebung 130 des Kraftfahrzeugs beobachtbar sind. Weitere Funktionen werden unten näher beschrieben oder sind beispielsweise der DE 10 2004 015 040 A1 entnehmbar.

Der Lichtleiter 142 ist in dem dargestellten Ausführungsbeispiel als Teil der Streulichtblende 132 in die untere Streulichtblende 136 integriert. Alternativ oder zusätzlich kann der Lichtleiter 142 auch beispielsweise ganz oder teilweise neben der Streulichtblende 132 angeordnet sein. Wird der Lichtleiter 142 als Teil der Streulichtblende 132 genutzt, so ist es besonders bevorzugt, wenn dieser an mindestens einer seiner Oberflächen 162, 164 mit eine Lichtreflexion unterdrückenden Eigenschaften ausgestattet ist, um beispielsweise Streuanteile des Primärlichts der Kamera 112 zu dämpfen. Zu diesem Zweck kann beispielsweise eine Beschichtung 166 und/oder eine Aufrauung vorgesehen sein.

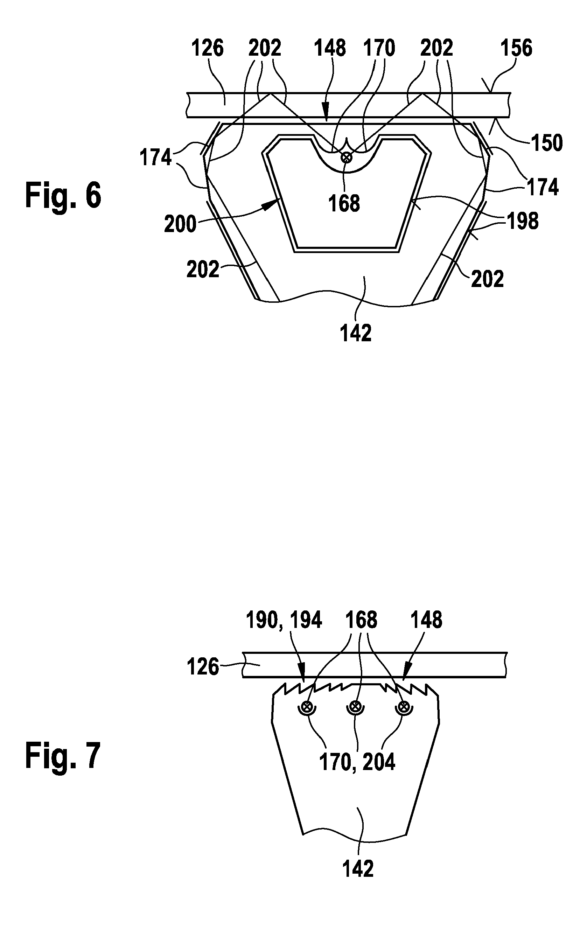

Optional kann der optische Sekundärsensor 138 weiterhin mindestens eine Lichtquelle 168 aufweisen, welche in Figur 1 lediglich symbolisch angedeutet ist. Diese Lichtquelle 168 kann beispielsweise eine oder mehrere Leuchtdioden (LED) umfassen, welche beispielsweise kontinuierlich und/oder gepulst im sichtbaren und/oder im infraroten und/oder im ultravioletten Spektralbereich emittieren. Auch andere Arten von Lichtquellen 168 sind denkbar. Weiterhin kann der optische Sekundärsensor 138, ebenfalls optional, ein Einkoppelelement 170 aufweisen, welches in Figur 1 ebenfalls lediglich symbolisch angedeutet ist und welches beispielsweise dazu dient, das Licht der Lichtquelle 168 derart in den Lichtleiter 142 einzukoppeln, dass dieses überwiegend in Richtung des Lichteintritts 148 emittiert wird, wohingegen eine Emission in Richtung eines Lichtaustritts 172, also in Richtung des optischen Sensors 140, unterdrückt wird. Für mögliche Ausführungsbeispiele eines Einkoppelelements 170 kann beispielsweise auf die DE 10 2004 015 040 A1 und/oder auf eines der im Folgenden beschriebenen Ausführungsbeispiele, beispielsweise gemäß Figur 6, verwiesen werden.

Weiterhin umfasst der Lichtleiter 142 in dem in Figur 1 dargestellten Ausführungsbeispiel ein Umlenkelement 174, welches in diesem Fall beispielsweise als verspiegelte Außenoberfläche des Lichtleiters 142 im Bereich des Lichteintritts 148 und/oder als totalreflektierende Prismenfläche ausgestaltet sein kann. Das in Figur 1 dargestellte Ausführungsbeispiel des Kameramoduls 110 ist aufgrund dieses Umlenkelements 174 in der Lage, auf das erste optische Element der DE 10 2004 015 040 A1 zu verzichten, welches dort zur Lenkung des Sekundärlichts und zu dessen Fokussierung erforderlich ist. So wird die Aufgabe einer Umlenkung 174 des Sekundärlichts 144 durch den Lichtleiter 142 selbst bzw. dessen Umlenkelement 174 oder ein separates Umlenkelement übernommen. Weiterhin kann durch die Integration des Lichtleiters 142 in die Streulichtblende 132 der in Figur 1 dargestellte Aufbau kompakt und robust ausgestaltet werden, wobei der Lichtleiter 142 selbst aufgrund seiner Oberflächenbeschaffenheit die Streuanteile des Primärlichts dämpft.

Weiterhin kann der Lichtleiter 142 auch abbildende Eigenschaften aufweisen. So kann dieser beispielsweise das von ihm übertragene Sekundärlicht 144 kollimieren und beispielsweise durch eine geschickt gestaltete Form des Lichteintritts 148 und/oder des Lichtaustritts 172 sowie gegebenenfalls durch abbildende Eigenschaften des Umlenkelements 174 (z.B. eine gekrümmte Spiegelfläche) auf den optischen Sensor 140 abbilden, beispielsweise als möglichst scharfes Bild.

Eine Besonderheit des in Figur 1 dargestellten Ausführungsbeispiels besteht also beispielsweise in der Gestaltung des Lichtleiters 142 als langer, flacher Sekundärlichtleiter für das Sekundärlicht 144. Auf der Oberfläche des Lichtleiters 142 kann, wie oben dargestellt, eine entsprechende Streulichtblendenfunktion realisiert werden, beispielsweise durch die Beschichtung 166 und/oder die Aufrauung. Auf diese Weise kann die Trennung zwischen Sekundärlicht 144 und dem Primärlichtpfad der Kamera 112 insbesondere im Wesentlichen allein durch die beispielsweise dünn ausgestaltete Beschichtung 166 auf einer oder beiden Oberflächen 162, 164 des Lichtleiters 142 erreicht werden. Durch diese Trennung kann beispielsweise auf eine in vielen Kameramodulen 110 optional vorhandene Blende 176, welche in Figur 1 dargestellt ist und welche üblicherweise eine Trennung des Sekundärlichts 144 vom Licht der Kamera 112 bewirkt, verzichtet werden. Im Bild des ortsauflösenden Bildgebungssensors 118 können durch diese räumliche Trennung vorzugsweise ein Abbild durch die Kamera 112 in Form eines Primärbildbereichs 178 und ein Abbild aus einem Sichtbereich 180 (in Figur 1 lediglich angedeutet) in Form eines Sekundärbildbereichs 182 allein durch eine Bildauswertung festgestellt werden. Auf die aufwändig zu justierende, optionale Blende 176, welche beispielsweise auf einem Glaslid 184 aufgebracht sein kann, kann dementsprechend verzichtet werden. Wie oben dargestellt, kann sich die Streulichtblende 132 alternativ auch ganz oder teilweise als separates Bauteil neben dem langgestreckten Lichtleiter 142 befinden.

Insbesondere durch die lange, flache Form und eine geeignete Oberflächengestaltung des Lichtleiters 142 kann das Sekundärlicht 144 kollimiert werden, und es können Streulicht im Sekundärlicht 144 durch die oben beschriebene Oberflächengestaltung unterdrückt und Oberflächenreflexionen stark gedämpft werden. Insbesondere für eine Unterdrückung von Streuanteilen des Sekundärlichts 144 können die Beschichtung 166 und/oder die Aufrauung der Streulichtblenden 134 und/oder 136 effektiv eingesetzt werden. Dies ist insbesondere von Vorteil, wenn der optische Sekundärsensor 138, wie oben dargestellt, eine Leuchtdiode als Lichtquelle 168 umfasst. Aufgrund der in der Regel vergleichsweise hohen strahlenden Fläche von Leuchtdioden und dem großen Öffnungswinkel derartiger Lichtquellen lassen sich diese Arten von Lichtquellen praktisch nie ohne Leistungsverlust fokussieren. Am Lichtaustritt 172 des Lichtleiters 142 sollte jedoch nur solches Sekundärlicht 144 austreten, welches auch zum Sekundärbildbereich 182 gelangt, das heißt Sekundärlicht 144 mit kleinem Öffnungswinkel. Streuungen in Richtung des Primärbildbereichs 178 sollten vermieden werden. Zu diesem Zweck kann mittels der oben dargestellten Aufrauung und/oder der Beschichtung 166 ein divergierender Anteil der LED-Beleuchtung ausgeblendet werden, das heißt dieser Anteil im Sekundärlicht 144 unterdrückt werden. Die Oberflächen 162 und/oder 164, welche mit dieser Aufrauung und/oder Beschichtung 166 versehen sind, können dann in einer Doppelfunktion sowohl die Streuungen des Primärlichts der Kamera 112 als auch Streuungen des Sekundärlichts 144 verhindern oder zumindest unterdrücken.

In Figur 2 ist in perspektivischer Darstellung das in Figur 1 schematisch in Schnittdarstellung von der Seite gezeigte Ausführungsbeispiel des Kameramoduls 110 in einer möglichen Realisierung gezeigt. Auch hier wird wiederum eine spiegelnde Umlenkung des Sekundärlichts 144 in Form eines primenförmigen und/oder verspiegelten Umlenkelements 174 realisiert. Das in Figur 2 dargestellte Modell ist nicht maßstabsgerecht und nicht optimiert in Bezug auf die Primärfunktion der Kamera 112. Die Pfeile 186, 188 bezeichnen dabei den Lichtpfad des Sekundärlichts 144, auf welchem sich dieses vom Lichteintritt 148 aus hin zum Lichtaustritt 172 ausbreitet. Das von der (in Figur 2 nicht dargestellten) Windschutzscheibe 126 ausgehende Sekundärlicht 144 gelangt über den Lichteintritt 148 in den Lichtleiter 142, wird an der spiegelnden Fläche des Umlenkelements 174 umgelenkt und verlässt den Lichtleiter 142 aus dem Lichtaustritt 172 in Richtung des Objektivs 116 der Kamera.

Weiterhin ist in der perspektivischen Darstellung gemäß Figur 2 die mögliche trichterförmige Ausgestaltung des Lichtleiters 142 dargestellt, durch welche dieser eine kollimierende Wirkung auf das Sekundärlicht 144 ausübt. So ist in diesem Ausführungsbeispiel der Lichtleiter 142 an seinem Lichteintritt 148 zumindest in einer Dimension vorzugsweise breiter ausgestaltet als am Lichtaustritt 172.

Für weitere mögliche Ausgestaltungen des Ausführungsbeispiels gemäß Figur 2 kann auf die Beschreibung der Figur 1 verwiesen werden. Vorzugsweise sind alle Flächen des Lichtleiters 142, mit Ausnahme der Flächen im Bereich des Lichteintritts 148, des Lichtaustritts 172 und der Fläche bzw. Flächen im Bereich des Umlenkelements 174, derart ausgestaltet, dass Lichtreflexionen innerhalb des Lichtleiters 142 an ihnen zu einer möglichst starken Dämpfung führen, wie es zum Beispiel durch Aufrauen oder einen geänderten Brechungsindex am Rand erreicht wird. Dementsprechend können die Oberflächen 162, 164 des Lichtleiters 142 ausgestaltet sein. Die Aufrauung und/oder eine entsprechende Beschichtung 166 auf den Oberflächen 162 und/oder 164 können wiederum auch die oben beschriebene Doppelfunktion einer gleichzeitigen Unterdrückung von Streulichtanteilen im Sekundärlicht 144 und im Primärlicht wahrnehmen.

In bevorzugter Ausprägung ist somit die Streulichtblende 132 zumindest stückweise identisch mit einer oder beiden dieser Oberflächen 162, 164. Aus der Betrachtung in Figur 1 wird deutlich, dass das Sekundärlicht unter diesen Voraussetzungen besonders dann stark kollimiert wird, wenn die Höhe des Lichtleiters im Verhältnis zur Länge des Lichtweges im Lichtleiter besonders klein ist.

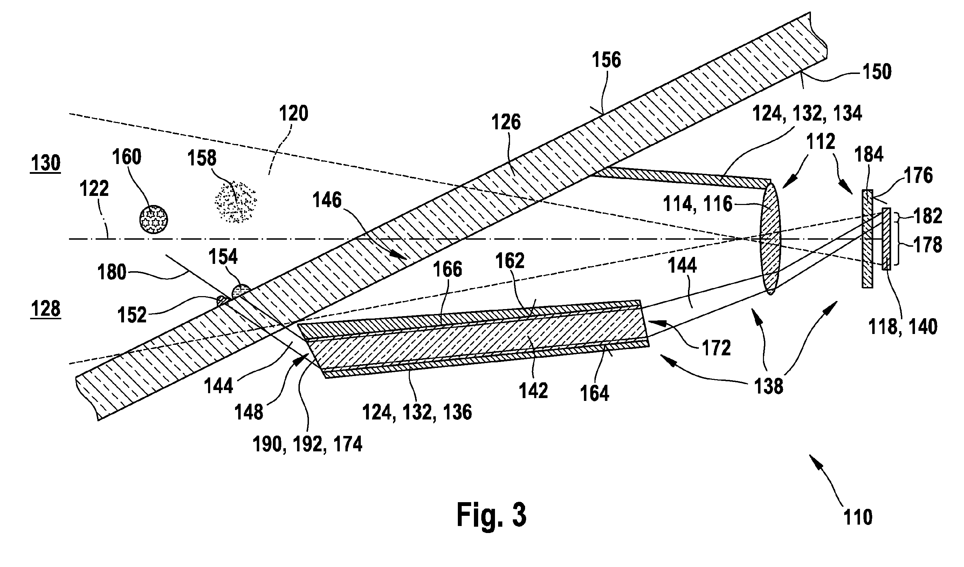

In Figur 3 ist, in ähnlicher Darstellung zu Figur 1, ein zweites Ausführungsbeispiel eines erfindungsgemäßen Kameramoduls 110 schematisch dargestellt. Das Ausführungsbeispiel gemäß Figur 3 entspricht weitgehend dem Ausführungsbeispiel gemäß Figur 1, so dass in weiten Teilen auf die obige Beschreibung verwiesen werden kann. In dem in Figur 3 dargestellten Ausführungsbeispiel unterscheidet sich jedoch der Lichtleiter 142 im Bereich des Lichteintritts 148 von dem in Figur 1 dargestellten Ausführungsbeispiel. So weist der Lichtleiter 142 in dem in Figur 3 dargestellten Ausführungsbeispiel anstatt der Abwinkelung gemäß Figur 1 ein bildgebendes Element 190 in Form eines prismenförmigen Endes 192 auf. Wie anhand des Strahlengangs des Sekundärlichts 144 in diesem Bereich zu erkennen ist, kann auch dieses prismenförmige Ende 192 als Umlenkelement 174 dienen, da Sekundärlicht 144 am Lichteintritt 148 durch dieses prismenförmige Ende 192 derart gebrochen wird, dass sich aus Richtung des Sichtbereichs 180 eintretende Strahlen im Lichtleiter 142 ausbreiten können. Gegenüber der Ausführungsform gemäß Figur 1 kann bei der in Figur 3 dargestellten Ausführungsform somit auf eine spiegelnde Fläche im Bereich des Umlenkelements 174 verzichtet werden. Derartig spiegelnde Flächen können jedoch auch zusätzlich vorgesehen sein.

Durch das Umlenken des Sekundärlichts 144 an dem prismenförmigen Ende 192 des Lichteintritts 148, wobei auch mehrere Prismen vorgesehen sein können, oder an einer spiegelnden Oberfläche gemäß Figur 1, wird erreicht, dass das Sekundärlicht 144 sehr nahe an der Windschutzscheibe 126 aus- und eingekoppelt werden kann, so dass vorzugsweise von der Innenseite 150 der Windschutzscheibe 126 kein Fremdlicht in den Lichtleiter 142 gelangen kann. Weiterhin kann in der Nähe der Windschutzscheibe 126 eine Blickrichtung nach oben eingenommen werden, was in Figur 1 und in Figur 3 an der gegenüber der optischen Achse 122 nach oben geneigten Richtung des Sichtbereichs 180 des Sekundärsensors 138 erkennbar ist. Auf diese Weise kann beispielsweise gleichzeitig zu einer Funktion einer Regenerkennung eine Umgebungshelligkeitsbestimmung, wie beispielsweise eine Solar-Load-Erkennung, und/oder eine Helligkeitsbestimmung des Himmels durchgeführt werden.

Durch eine geeignete Gestaltung des Lichteintritts 148 und/oder des Lichtaustritts 172 und/oder des Lichtleiters 142 als Ganzem können eine Bündelung des Sekundärlichts 144 bzw. eine Abbildung desselben erreicht werden. So können beispielsweise die äußere Scheibenoberfläche 156 der Windschutzscheibe 126 und/oder Partikel 152 bzw. Regentropfen 154 scharf auf dem ortsauflösenden Bildgebungssensor 118 und/oder dem optischen Sensor 140 des optischen Sekundärsensors 138 als Sekundärbild in dem Sekundärbildbereich 182 abgebildet werden. Durch diese Fokussierung können auch die Strukturen von Objekten, wie beispielsweise in den Figuren 1 und 3 in Form von Nebel 158 und/oder Hagel 160 gezeigt, die dicht über der Windschutzscheibe 126 angeordnet sind, anhand ihrer Kontur unterschieden werden. Auf diese Weise lassen sich beispielsweise Schneeflocken, Hagel, Regentropfen, Staub oder ähnliches unterscheiden und anhand der Unterscheidung der Arten des Niederschlags entsprechende Maßnahmen treffen. Zusätzlich kann aus der Positionsveränderung dieser Objekte innerhalb einer Zeitspanne auf äußere Einflüsse, wie beispielsweise eine Windrichtung, geschlossen werden. Ingesamt kann, in diesem wie auch in anderen Fällen der Erfindung, das Kameramodul 110 zum Zweck der Auswertung der Informationen der Kamera 112 und/oder des optischen Sekundärsensors 138 eine integrierte oder auch dezentralisierte Steuerung umfassen, welche für eine derartige Auswertung beispielsweise programmtechnisch eingerichtet ist. Eine derartige Steuerung ist in den Figuren nicht dargestellt.

Neben dem bildgebenden Element 190 in Form des prismenförmigen Endes 192 in Figur 3 können weitere bildgebende Elemente vorgesehen sein, beispielsweise ein bildgebendes Element am Lichtaustritt 172. Neben prismenförmigen Elementen können auch andere Arten bildgebender Elemente vorgesehen sein. Wird beispielsweise die Spiegelfläche des Umlenkelements 174 in Figur 1 gekrümmt ausgestaltet, so kann auch diese als bildgebendes Element am Lichteintritt 148 wirken. Alternativ oder zusätzlich kann auch das prismenförmige Ende 192 am Lichteintritt 148 gemäß dem Ausführungsbeispiel in Figur 3 als gebogenes prismenförmiges Element ausgestaltet sein und somit beispielsweise fokussierende Eigenschaften aufweisen.

Der Lichtleiter 142 kann auf diese Weise oder auch auf andere Weise dazu ausgestaltet werden, um ein Höhen-zu-Breiten-Verhältnis des Sichtbereichs 180, beispielsweise der tatsächlich auf der Windschutzscheibe 126 beobachteten Fläche, gegenüber dem Höhen-zu-Breiten-Verhältnis des Sekundärbildbereichs auf dem ortsauflösenden Bildgebungssensor 118 zu verändern, vorzugsweise zu verkleinern.

Bevorzugt erfolgt die Lichtführung des Sekundärlichts 144 derart, dass das Abbild dieses Sekundärlichts 144 auf dem Sekundärbildbereich 182 neben dem unteren Teil des Primärbildes im Primärbildbereich 178 liegt, welches zumeist erheblich dunkler ist als der obere Teil dieses Primärbildes. Hierdurch lässt sich in der Regel eine bessere Signaltrennung ermöglichen.

In den Ausführungsbeispielen gemäß den Figuren 1 bis 3 erfolgt jeweils am Lichteintritt 148 durch das Umlenkelement 174 eine Umlenkung bzw. Ablenkung im Sekundärstrahlengang der Sekundärstrahlen 144. Bei einer alternativen, jedoch weniger bevorzugten und vereinfachten Ausführungsform des erfindungsgemäßen Kameramoduls 110 kann auf eine derartige Umlenkung in der Nähe des Lichteintritts 148 auch ganz oder teilweise verzichtet werden.

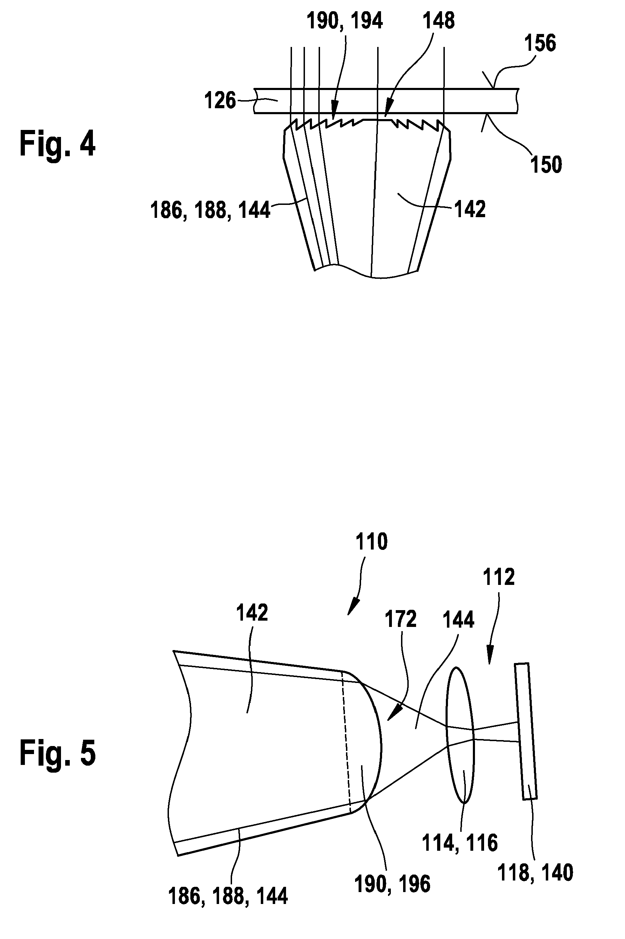

Allgemein gilt, dass, wenn der Abstand zwischen Lichteintritt 148 des Lichtleiters 142 und der inneren Oberfläche 150 der Windschutzscheibe 146 sehr gering ist, ein Doppelnutzen eines langen Lichtleiters 142 und einer damit verbundenen guten Kollimierung sowie einer geringen Einkoppelmöglichkeit für Fremdlicht erzielt wird. Bevorzugt erreicht man dieses Vorziehen des Lichtleiters 142 durch eine geeignete Gestaltung des Lichteintritts 148. In Figur 4 ist ein Ausführungsbeispiel eines Lichtleiters 142 dargestellt, in welchem der Lichteintritt 148 in Form eines Multiprismas 194 ausgestaltet ist. Dieses Multiprisma 194 ist dabei derart ausgestaltet, dass dieses als bildgebendes Element 190, ähnlich einer Fresnel-Linse, wirkt. Das Multiprisma 194 weist dabei möglichst viele Prismenflächen auf. Wie in Figur 4 anhand der exemplarisch dargestellten Strahlenverläufe des Sekundärlichts 144 gezeigt, sollte der Winkel der Prismenflächen relativ zur Windschutzscheibe 126 derart gewählt werden, dass die eintreffende Strahlung des Sekundärlichts bereits an der Scheibe in geeigneter Weise in Richtung hin zum Lichtaustritt 172 bzw. hin zur Bildaufnahmeoptik 114 und zum ortsauflösenden Bildgebungssensor 118 gebündelt wird. Eine solche Bündelung mittels Multiprismen ist auch in den in den übrigen Figuren dargestellten Ausführungsbeispielen alternativ oder zusätzlich implementierbar. Weiterhin ist in Figur 4 wiederum der optionale trichterförmige Verlauf des Lichtleiters 142 zu erkennen.

In dem in Figur 4 dargestellten Ausführungsbeispiel, wie auch in den in den Figuren 1 bis 3 dargestellten Ausführungsbeispielen, ist beispielhaft der Lichteintritt 148 mit einem bildgebenden Element 190 ausgestattet. Alternativ oder zusätzlich kann auch der Lichtaustritt 172, also der der Bildaufnahmeoptik 114 bzw. dem ortsauflösenden Bildgebungssensor 118 zuweisende Teil des Lichtleiters 142, mit einem derartigen bildgebenden Element 190 ausgestattet werden. Dies ist exemplarisch in Figur 5 dargestellt, wobei diese Figur wiederum eine Draufsicht auf den Lichtleiter 142 zeigt, analog zur Darstellung gemäß Figur 4. Da in der Regel die Gestalt der Bildaufnahmeoptik 114, insbesondere des Objektivs 116, durch die Primärfunktion vorgegeben ist und nicht auf die Sekundärfunktion angepasst werden kann, kann der gesamte Lichtleiter 142 bildgebend ausgestaltet werden, beispielsweise durch eine entsprechende Gestaltung des bildgebenden Elements 190 am Lichtaustritt 172. Dabei ist in Figur 5 das bildgebende Element 190 am Lichtaustritt 172 als Linsenelement 196 ausgestaltet. Alternativ oder zusätzlich sind jedoch auch andere Ausgestaltungen des bildgebenden Elements 190 möglich, beispielsweise wiederum eine Ausgestaltung als Multiprisma. Insgesamt lässt sich auf diese Weise das Sekundärbild als scharfes Abbild der Objekte auf der Scheibenoberfläche 156 der Windschutzscheibe 126 auf dem ortsauflösenden Bildgebungssensor 118 abbilden. Alternativ oder zusätzlich lässt sich, wie oben beschrieben, durch das mindestens eine bildgebende Element 190 wiederum auch ein Höhen-zu-Breiten-Verhältnis verändern bzw. anpassen.

In dem in Figur 3 dargestellten Ausführungsbeispiel sind, im Gegensatz zu Figur 1, keine Lichtquelle 168 und kein Einkoppelelement 170 dargestellt. Derartige Elemente 168, 170 können jedoch optional auch in diesem Ausführungsbeispiel vorgesehen sein.

Ein Beispiel einer möglichen Lichteinkopplung mittels Einkoppelelementen 170 ist in Figur 6 dargestellt. Diese Figur zeigt wiederum, ähnlich zur Darstellung gemäß Figur 4, eine Draufsicht auf den Lichtleiter 142. Dieser Lichtleiter 142 kann an einer oder mehreren Oberflächen 198 wiederum ganz oder teilweise beschichtet sein. Beispielsweise können wiederum Umlenkelemente 174, beispielsweise in Form von Spiegelungen, vorgesehen sein, wie in Figur 6 angedeutet.

Der Lichtleiter 142 weist in dem in Figur 6 dargestellten Ausführungsbeispiel eine Aussparung 200 auf. Diese Aussparung 200 kann durchgehend oder lediglich als Vertiefung in dem Lichtleiter 142 ausgebildet sein. Im Inneren kann diese Aussparung 200 auch wiederum ganz oder teilweise mit einer Beschichtung versehen sein, beispielsweise um eine Einkopplung von Licht (in Figur 6 mit der Bezugsziffer 202 bezeichnet) der Lichtquelle 168 unmittelbar in Richtung des Lichtaustritts 172 zu vermeiden.

Die Lichtquelle 168 ist dabei im Bereich zweier linsenförmiger Einkoppelelemente 170 angeordnet, welche der Lichtquelle 168 zuweisende, vorzugsweise nicht beschichtete Oberflächen aufweisen. Auf diese Weise wird Licht der Lichtquelle 168 in den Lichtleiter 142 in Richtung des Lichteintritts 148 und der Windschutzscheibe 126 eingekoppelt, durchdringt die Windschutzscheibe 126 und wird an der äußeren Oberfläche 156 der Windschutzscheibe 126 reflektiert und wieder in den Lichtleiter 142 eingekoppelt. Durch die genannten Umlenkelemente 174 wird dieses Licht entsprechend hin zum Lichtaustritt 172 (in Figur 6 nicht dargestellt) gelenkt und gegebenenfalls fokussiert.

Es sei darauf hingewiesen, dass der in Figur 6 dargestellte Einkopplungsmechanismus zum Einkoppeln des Lichts 202 der Lichtquelle 168 lediglich ein mögliches Ausführungsbeispiel einer Lichteinkopplung darstellt. Weiterhin kann auf eine zusätzliche Lichtquelle 168 auch alternativ vollständig verzichtet werden, so dass beispielsweise lediglich das Umgebungslicht oder ein Scheinwerferlicht als Beleuchtung genutzt wird. Die Verwendung einer zusätzlichen Lichtquelle 168 ist jedoch bevorzugt, da auf diesem Wege eine Lichtleistungsmessung ermöglicht wird, welche von einer bekannten Lichtleistung ausgeht und beispielsweise deren Abnahme als Messgröße bestimmt. Dies ist bei weniger gut definierten Lichtquellen, wie beispielsweise Umgebungslicht, in der Regel nur schwer möglich. Diese technische Hürde ließe sich jedoch beispielsweise durch die Verwendung einer zusätzlichen Sensorik zur Bestimmung der primären Intensität und/oder Leistung des Umgebungslichts und/oder des Scheinwerferlichts umgehen, so dass grundsätzlich auch diese Möglichkeit realisierbar ist.

Die mindestens eine Lichtquelle 168 kann, wie in Figur 6 gezeigt, innerhalb des Lichtleiters 142 angeordnet sein, wobei jedoch, alternativ oder zusätzlich, beispielsweise auch eine Anordnung unterhalb des Lichtleiters 142 möglich ist. Mittels der Lichtquelle 168 lassen sich bei geeigneter Anordnung, beispielsweise unter Vermeidung von Totalreflexionen, auch beispielsweise Objekte auf der Windschutzscheibe 126 beleuchten. Durch die Oberflächengestaltung des Lichtleiters 142, beispielsweise die in Figur 6 gezeigte Oberflächengestaltung, kann verhindert werden, dass dieses Licht 202 der Lichtquelle 168 direkt zum Objektiv 116 der Bildaufnahmeoptik 114 gelangt, ohne dass dieses Licht 202 Objekte auf der Scheibe beleuchtet hat.

Bei dem Ausführungsbeispiel in Figur 6 ist lediglich eine einzelne Lichtquelle 168 dargestellt. Alternativ lassen sich auch mehrere Lichtquellen 168 einsetzen, wie beispielsweise in einem in Figur 7 gezeigten Ausführungsbeispiel verdeutlicht ist. Durch diese räumliche Verteilung mehrerer Lichtquellen bzw. durch die Aufspaltung des Lichtstroms einer Lichtquelle auf mehrere Ausbreitungswege kann beispielsweise auch realisiert werden, dass der Sekundärbildbereich 182 bzw. die genutzten Bereiche auf dem Sekundärbildbereich 182 disjunkt sind. So können mehrere, voneinander getrennte Bereiche im Sekundärbildbereich 182 genutzt werden, um die verschiedenen Abbilder der Ausbreitungswege des Lichts 202 der Lichtquellen 168 abzubilden. Auf diese Weise können beispielsweise Abbilder redundant genutzt werden.

Bei dem in Figur 7 dargestellten Ausführungsbeispiel sind die Lichtquellen 168 jeweils optional mit Abschirmungen 204 versehen, welche auch als Einkoppelelemente 170 wirken und welche beispielsweise wiederum eine direkte Lichtausbreitung des Lichts der Lichtquellen 168 hin zum Lichtaustritt 172 verhindern. Diese Abschirmungen 204 können auch bildgebende Wirkungen aufweisen, beispielsweise zur Fokussierung des Lichts 202 der Lichtquellen 168.

Weiterhin ist in Figur 7 der Lichteintritt 148 wieder, ähnlich zu dem Ausführungsbeispiel gemäß Figur 4, optional als Multiprisma 194 ausgestaltet.

Die Lichtquelle 168 bzw. die mehreren Lichtquellen können auf unterschiedliche Weise ausgestaltet sein und können beispielsweise kontinuierliche Lichtquellen und/oder Blitzlichtquellen umfassen. Beispielsweise können zu diesem Zweck eine oder mehrere Leuchtdioden und/oder andere Arten von Lichtquellen 168 vorgesehen sein.

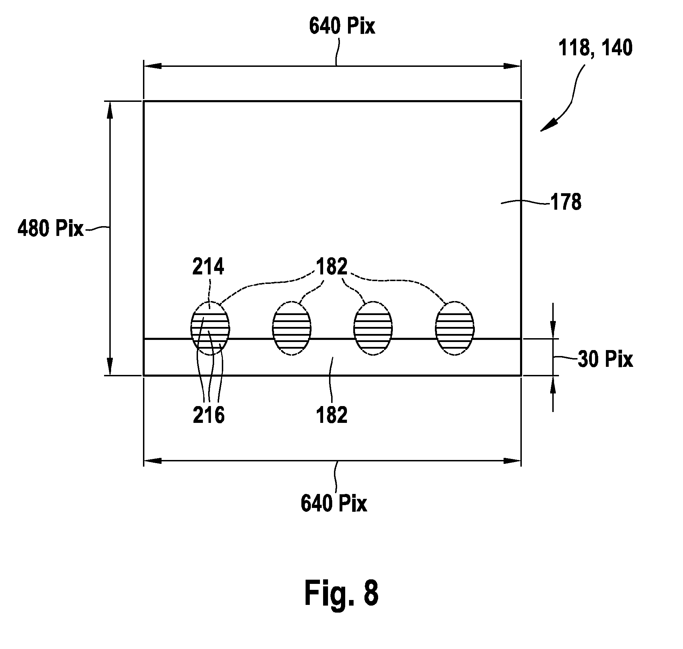

In Figur 8 ist ein Ausführungsbeispiel einer bildsensitiven Fläche eines ortsauflösenden Bildgebungssensors 118, welcher auch als optischer Sensor 140 des optischen Sekundärsensors 138 genutzt wird, dargestellt. Der ortsauflösende Bildgebungssensor 118 weist in diesem Ausführungsbeispiel eine Auflösung von 640x480 Pixeln auf. Dabei ist der Bildbereich unterteilt in einen Primärbildbereich 178, in welchen der Aufnahmebereich 120 der Kamera 112 abgebildet wird, und einen Sekundärbildbereich 182, in welchen der Sichtbereich 180 des optischen Sekundärsensors 138 abgebildet wird.

Dabei ist im Allgemeinen der Sekundärbildbereich 182 derart in seinem Verhältnis von Breite zu Höhe gewählt, dass dieses Verhältnis sehr groß ist. Im Beispiel in Figur 8 ist dies ein Verhältnis von 640 zu 30 Pixeln, also ungefähr ein Verhältnis von 21. Der Übergang zwischen dem Primärbildbereich 178 und dem Sekundärbildbereich 182 auf dem ortsauflösenden Bildgebungssensor 118 sollte dabei durch die Bildbearbeitung möglichst klar trennbar sein, so dass die sensierende Fläche, und möglichst nur diese, möglichst gleichmäßig viel Sekundärlicht 144 erhält. Der Sichtbereich 180 bzw. die in diesem Sichtbereich beobachtete Fläche der Windschutzscheibe 126 sollte jedoch in der Regel kein derartig großes Breiten-zu-Höhen-Verhältnis aufweisen, da beispielsweise Regentropfen in erster Näherung ein rundes Bild erzeugen. Dies verdeutlicht die Bedeutung und die Vorteile, welche die Ausgestaltung des Lichtleiters 142 als ein das Verhältnis der Breite zur Höhe veränderndes Element aufweist.

Weiterhin ist in Figur 8, als alternativ oder zusätzlich zu dem rechteckigen Sekundärbildbereich 182 realisierbare Ausführungsform, noch eine Mehrzahl disjunkter Sekundärbildbereiche 182 gezeigt, welche beispielhaft als vier gestrichelte Ovale dargestellt sind. Dieses Beispiel soll verdeutlichen, dass der Sekundärbildbereich 182 nicht notwendigerweise von dem Primärbildbereich 178 vollständig getrennt sein muss. Die räumliche Trennung des Lichts mehrerer Lichtquellen 168 und/oder die Aufspaltung des Lichtstroms des Lichts 202 dieser Lichtquellen 168, welche beispielsweise oben anhand der Figuren 7 und 8 beschrieben wurde, kann beispielsweise zur Erzeugung derartiger disjunkter Sekundärbildbereiche 182, wie sie in Figur 8 gestrichelt dargestellt sind, genutzt werden. Insbesondere wenn diese Sekundärbildbereiche 182 in einem Bereich des Primärbildbereichs 178 angesiedelt sind, welcher üblicherweise dunkel ist, lassen sich diese durch entsprechende Bildbearbeitungsmaßnahmen vom Bild der Kamera 112 trennen. Auch ein zeitliches Schema zur Trennung kann genutzt werden, wie unten näher beschrieben wird.

Bilder auf dem ortsauflösenden Bildgebungssensor 118 können in vielen Fällen beispielsweise zeilenweise aufgenommen werden. Derartige Verfahren werden häufig auch als "Rolling-Shutter-Verfahren" bezeichnet. Hierbei kann beispielsweise durch eine Synchronisation der mindestens einen Lichtquelle 168 mit einem Aufnahmealgorithmus des ortsauflösenden Bildgebungssensors 118 erreicht werden, dass ein Reflexbild von der Windschutzscheibe 126 klar einem bestimmten Bereich von Bildzeilen des ortsauflösenden Bildgebungssensors 118 zugeordnet werden kann. Dieses Verfahren ist grundsätzlich auch im Rahmen des erfindungsgemäßen Kameramoduls 110 einsetzbar. Das Verfahren bereitet jedoch den Nachteil, dass, wenn dieser Bereich des Sekundärbildes 182 mit einem hell beleuchteten Bereich des Primärbildbereichs 178 zusammenfällt, an diesen Stellen eine Auswertung nur schwer möglich ist.

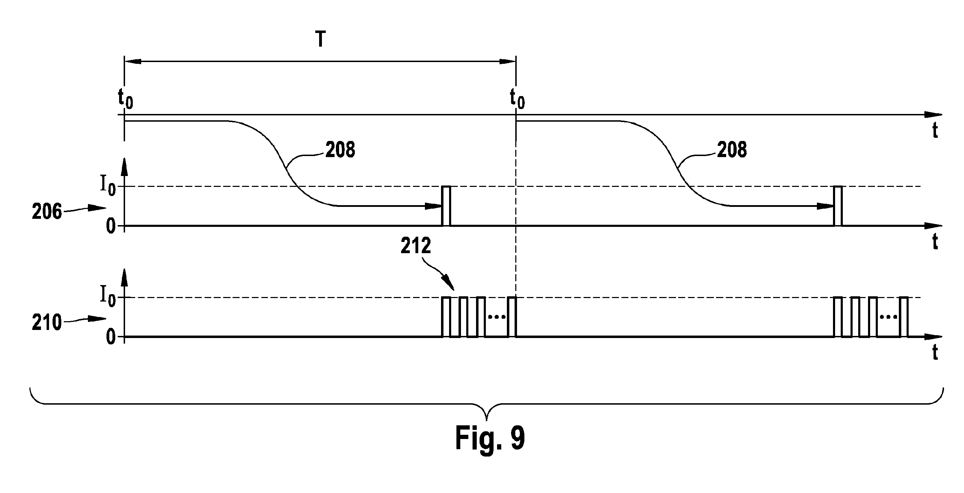

Alternativ oder zusätzlich zu der bereits anhand von Figur 8 beschriebenen örtlichen Redundanz durch mehrere Lichtpfade und/oder mehrere Lichtquellen kann daher eine zeilenweise Redundanz auch durch ein kurzzeitiges wiederholtes Beleuchten der Windschutzscheibe 126 erzielt werden. Dies wird schematisch anhand des Bildaufnahmeplans in Figur 9 beispielhaft erläutert.

In dieser Figur 9 sind drei Zeitachsen mit t bezeichnet. Jeweils zu Zeitpunkten t0 beginnt eine Bildaufnahme, wobei der Abstand T zwischen aufeinander folgenden Zeitpunkten t0 auch als Bildwiederholzeit bezeichnet wird. In Teilbild 206 ist ein herkömmliches bildsynchrones Belichtungsschema aufgetragen, welches grundsätzlich auch im Rahmen der vorliegenden Erfindung realisierbar ist. Dabei wird durch eine optionale Synchronisation (in Figur 9 mit der Bezugsziffer 208 bezeichnet) ein Belichtungspuls geschaltet, in welchem die Lichtintensität der Lichtquelle 168 von Null (oder einem geringen Offset) auf eine Intensität 10 kurzfristig geschaltet wird. Während dieser Zeit erfolgt eine Aufnahme von Bildinformationen des optischen Sekundärsensors 138.

Im in Figur 9 mit der Bezugsziffer 210 bezeichneten untersten Teilbild wird hingegen ein Bildaufnahmeverfahren mit einem Blitzlichtmuster 212 dargestellt. Auch dieses Blitzlichtmuster 212 kann wiederum (in Figur 9 nicht dargestellt) zum Beginn t0 der Bildaufnahme synchronisiert sein.

Ein Ergebnis einer derartigen Bildaufnahme des optischen Sekundärsensors 138 mit einem Blitzlichtmuster 212 ist ebenfalls in Figur 8 dargestellt, hier optional zusätzlich zu der Aufspaltung des Sekundärbildbereichs 182 in mehrere Teilbereiche, welche in Figur 8 gestrichelt dargestellt sind. Dabei ist zu erkennen, dass die in Figur 8 jeweils mit der Bezugsziffer 214 bezeichnete gesamte bestrahlte Fläche der Teilbereiche des Sekundärbildbereichs 182 jeweils in mehrere streifenförmige genutzte Flächen 216 unterteilt ist. Auf diese Weise sind in dem in Figur 8 dargestellten Bild redundant Informationen des optischen Sekundärsensors 138 enthalten, welche sich beispielsweise rechnerisch separieren lassen. Die genutzten Flächen 216 treten als Störungen im Primärbildbereich 178 auf, deren Nutzinformation beispielsweise mittels entsprechender Korrelationstechniken ermittelt werden kann. Auf diese Weise lässt sich die zur Verfügung stehende bildsensitive Fläche des ortsauflösenden Bildgebungssensors 118 optimal sowohl für die Primärfunktion der Kamera 112 als auch für die Sekundärfunktion des optischen Sekundärsensors 138 nutzen.

## Patentansprüche

1. Kameramodul (110) für den Einsatz in einem Kraftfahrzeug, umfassend mindestens eine Kamera (112) mit einem ortsauflösenden Bildgebungssensor (118) zur Erfassung eines Aufnahmebereichs (120), insbesondere eines Verkehrsraumes (128) der Umgebung des Kraftfahrzeugs, weiterhin umfassend mindestens einen in dem Kameramodul (110) integrierten optischen Sekundärsensor (138), insbesondere einen Regensensor, wobei der optische Sekundärsensor (138) mindestens einen optischen Sensor (140) und mindestens einen Lichtleiter (142) umfasst, wobei der Lichtleiter (142) eingerichtet ist, um mindestens ein optisches Signal von einem Einkopplungsbereich (146) des Kameramoduls (110) zu dem optischen Sensor (140) zu leiten.

2. Kameramodul (110) nach dem vorhergehenden Anspruch, weiterhin umfassend eine Streulichtblende (132) zur Verminderung der Einkopplung von Streulicht in den Bildgebungssensor (118), wobei der Lichtleiter (142) zumindest teilweise in die Streulichtblende (132) integriert ist.

3. Kameramodul (110) nach einem der vorhergehenden Ansprüche, wobei der Lichtleiter (142) mindestens eine eine Lichtreflexion unterdrückende Oberfläche (162, 164; 198) aufweist, insbesondere eine aufgeraute und/oder eine beschichtete Oberfläche (162, 164; 198).

4. Kameramodul (110) nach einem der vorhergehenden Ansprüche, wobei der Lichtleiter (142) mindestens ein Umlenkelement (174) aufweist.

5. Kameramodul (110) nach dem vorhergehenden Anspruch, wobei das Umlenkelement (174) ausgestaltet ist, um einen Sichtbereich (180) des optischen Sekundärsensors (138) gegenüber einer optischen Achse (122) der Kamera (112) zu verkippen, insbesondere zur Betrachtung eines über dem Kraftfahrzeug angeordneten Umgebungsbereichs (130).

6. Kameramodul (110) nach einem der beiden vorhergehenden Ansprüche, wobei das Umlenkelement (174) mindestens eines der folgenden Elemente aufweist: ein Prisma; einen Spiegel; eine zumindest teilweise verspiegelte Oberfläche des Lichtleiters (142).

7. Kameramodul (110) nach einem der vorhergehenden Ansprüche, wobei der Lichtleiter (142) eine optische Abbildungseigenschaft aufweist, insbesondere eine kollimierende Eigenschaft.

8. Kameramodul (110) nach einem der vorhergehenden Ansprüche, wobei der Lichtleiter (142) mindestens einen Lichteintritt (148) und mindestens einen Lichtaustritt (172) aufweist, wobei der Lichtleiter (142) an dem Lichteintritt (148) und/oder dem Lichtaustritt (172) mindestens ein bildgebendes Element (190) aufweist.

9. Kameramodul (110) nach dem vorhergehenden Anspruch, wobei das bildgebende Element (190) mindestens eines der folgenden Elemente aufweist: ein Linsenelement (196); ein Prisma (192); ein Multiprisma (194), insbesondere eine Fresnel-Linse.

10. Kameramodul (110) nach einem der vorhergehenden Ansprüche, wobei der Lichtleiter (142) eingerichtet ist, um ein Höhen-zu-Breiten-Verhältnis eines Sichtbereichs (180) des optischen Sekundärsensors (138) zu verändern.

11. Kameramodul (110) nach einem der vorhergehenden Ansprüche, wobei der optische Sensor (140) des optischen Sekundärsensors (138) zumindest teilweise identisch ist mit dem Bildgebungssensor (118) der Kamera (112).

12. Kameramodul (110) nach dem vorhergehenden Anspruch, wobei der Aufnahmebereich (120) der Kamera (112) auf einen Primärbildbereich (178) des Bildgebungssensors (118) abgebildet wird und wobei ein Sichtbereich (180) des optischen Sekundärsensors (138) auf einen Sekundärbildbereich (182) des Bildgebungssensors (118) abgebildet wird.

13. Kameramodul (110) nach dem vorhergehenden Anspruch, wobei der Primärbildbereich (178) und der Sekundärbildbereich (182) zumindest teilweise verschieden sind.

14. Kameramodul (110) nach einem der beiden vorhergehenden Ansprüche, wobei das Kameramodul (110) ausgestaltet ist, um mittels einer zeitlichen Aufnahmeabfolge Signale des optischen Sekundärsensors (138) von Signalen der Kamera (112) zu trennen.

15. Kameramodul (110) nach dem vorhergehenden Anspruch, wobei der optische Sekundärsensor (138) eine Blitzlichtbeleuchtung, insbesondere eine Blitzlichtbeleuchtung zur Erzeugung eines Blitzlichtmusters (212) mit mehrfacher Blitzauslösung je Bildwiederholzeit, aufweist.

16. Kameramodul (110) nach einem der drei vorhergehenden Ansprüche, wobei die Kamera (112) eine Bildaufnahmeoptik (114) aufweist, wobei Sekundärlicht (144) aus dem Lichtleiter (142) auf dem Weg zu dem optischen Sensor (140) zumindest teilweise durch diese Bildaufnahmeoptik (114) hindurchtritt.

17. Kameramodul (110) nach einem der vorhergehenden Ansprüche, wobei der optische Sekundärsensor (138) mindestens eine Lichtquelle (168) und mindestens ein Einkoppelelement (170) zur Einkopplung von Licht (202) der Lichtquelle (168) in den Lichtleiter (142) aufweist.

18. Kameramodul (110) nach dem vorhergehenden Anspruch, wobei das Einkoppelelement (170) ausgestaltet ist, um ein Einkoppeln von Licht (202) in Richtung des Einkopplungsbereichs (146) zu ermöglichen und ein Einkoppeln von Licht (202) hin zu dem optischen Sensor (140) zumindest teilweise zu vermeiden.

19. Verfahren zur optischen Überwachung eines Umgebungsbereichs eines Kraftfahrzeugs unter Verwendung eines Kameramoduls (110), insbesondere eines Kameramoduls (110) nach einem der vorhergehenden Ansprüche, wobei mittels mindestens einer Kamera (112) mit einem ortsauflösenden Bildgebungssensor (118) ein Aufnahmebereich (120) erfasst wird, insbesondere ein Verkehrsraum (128) der Umgebung des Kraftfahrzeugs, wobei weiterhin mindestens ein in dem Kameramodul (110) integrierter optischer Sekundärsensor (138) verwendet wird, insbesondere ein Regensensor, wobei der optische Sekundärsensor (138) mindestens einen optischen Sensor (140) umfasst, wobei mindestens ein optisches Signal von einem Einkopplungsbereich (146) des Kameramoduls (110) zu dem optischen Sensor (140) geleitet wird.

20. Verfahren nach dem vorhergehenden Anspruch, wobei der Aufnahmebereich (120) der Kamera (112) auf einen Primärbildbereich (178) des Bildgebungssensors (118) abgebildet wird und wobei ein Sichtbereich (180) des optischen Sekundärsensors (138) auf einen Sekundärbildbereich (182) des Bildgebungssensors (118) abgebildet wird.

21. Verfahren nach dem vorhergehenden Anspruch, wobei mittels einer zeitlichen Aufnahmeabfolge Signale des optischen Sekundärsensors (138) von Signalen der Kamera (112) getrennt werden.

22. Verfahren nach dem vorhergehenden Anspruch, wobei eine Blitzlichtbeleuchtung des optischen Sekundärsensors (138) verwendet wird, insbesondere eine Blitzlichtbeleuchtung zur Erzeugung eines Blitzlichtmusters (212) mit mehrfacher Blitzauslösung je Bildwiederholzeit.
